Europäisches Patentamt

European Patent Office

Office européen des brevets

(19)

(11) Publication number: **0 203 769**

**A2**

## (12) EUROPEAN PATENT APPLICATION

(21) Application number: **86303822.0**

(22) Date of filing: **20.05.86**

(51) Int. Cl.⁴: **C08F 299/06 , C08F 220/36 , C08G 18/12**

(30) Priority: **28.05.85 GB 8513309**

(43) Date of publication of application:
**03.12.86 Bulletin 86/49**

(84) Designated Contracting States:
**AT BE CH DE FR GB IT LI LU NL SE**

(71) Applicant: **IMPERIAL CHEMICAL INDUSTRIES PLC**
**Imperial Chemical House Millbank**
**London SW1P 3JF(GB)**

(72) Inventor: **Thomson Galbraith, Sarah**
**1 Haweswater Close**
**Beechwood Runcorn Cheshire(GB)**
Inventor: **Nield, Eric**
**3 Dell Lees**
**Seer Green Beaconsfield Bucks HP9 2UJ(GB)**
Inventor: **McCluskey, John Alan**
**100 Norlean Crescent**
**Runcorn Cheshire WA7 5ET(GB)**
Inventor: **Orton, Michael Leslie**
**24 School Lane**
**Hartford Northwich Cheshire(GB)**

(74) Representative: **Stephenson, Kenneth et al**
**Imperial Chemical Industries PLC Legal**
**Department: Patents PO Box 6 Bessemer Road**
**Welwyn Garden City Herts, AL7 1HD(GB)**

(54) **Process.**

(57)

PROCESS

A process for the preparation of cross-linked products which comprises the step of polymerising a polymerisable composition which comprises:

Component A which is an unsaturated urethane;

Component B which is a vinyl monomer which is liquid at room temperture and which is a solvent for the unsaturated urethane;

Component C which is an isocyanate-ended soft segment, and

Component D which is a compound containing a plurality of isocyanate-reactive groups and having a molecular weight of less than 250,

wherein the weight ratio of Component A:

Component B is between 20:80 and 80:20 and the weight ratio of (Component A + Component B):-(Component C + Component D) is between 85:15 and 15:85.

# PROCESS

This invention relates to a process for the preparation of cross-linked products derived from unsaturated urethanes and to such products.

In our European Patent Specification No 0,064,809A, there are disclosed polymerisable compositions which comprise certain unsaturated urethanes and methyl methacrylate as comonomer.

The curing of certain of the aforesaid polymerisable compositions produces cured products which have high heat distortion temperatures of the order of 100-140°C, say. However, such products tend to have low impact strengths and low tensile elongation to breaks.

We have now found that products having a desirable balance of properties may be obtained by curing, under certain conditions, polymerisable compositions which comprise an unsaturated urethane, methyl methacrylate and polyurethane precursors.

According to the present invention there is provided a process for the preparation of cross-linked products which process comprises the step of polymerising a polymerisable composition which comprises:

Component A which is an unsaturated urethane;

Component B which is a vinyl monomer which is liquid at room temperature and which is a solvent for the unsaturated urethane;

Component C which is an isocyanate-ended soft segment;

and

Component D which is a compound containing a plurality of isocyanate-reactive groups and having a molecular weight of less than 250,

wherein the weight ratio of Component A:Component B is between 20:80 and 80:20; and

the weight ratio of (Component A + Component B):

(Component C + Component D) is between 85:15 and 15:85 and preferably is between 85:15 and 50:50.

In the process according to the present invention Component A and Component B copolymerise via their double bonds to form a cross-linked vinyl copolymer; and Component C and Component D react together to form a polyurethane which, preferably, is cross-linked. The process is carried out under conditions such that the aforesaid polyurethane has developed a degree of polymerisation of at least about three before it phase separates from the polymerising composition.

It is believed that as the process according to the present invention proceeds, the polyurethane derived from Components C and D forms a continuous phase; the cross-linked vinyl copolymer may form a co-continuous phase or it may form discrete domains in the continuous phase.

Preferably a small amount, up to about 10% say, of chemical grafting takes place between the cross-linked vinyl copolymer and the polyurethane. However, we do not exclude .the possibilities that there are no chemical bonds binding the cross-linked vinyl copolymer to the polyurethane or that the cross-linked vinyl copolymer and the polyurethane are cross-linked chemically to each other.

The unsaturated urethane which is used in the process according to the present invention is preferably derived from a hydroxyalkyl acrylate or methacrylate by reaction of the hydroxyl groups thereof with the isocyanate groups of a first isocyanate composition which comprises

(i) a polyisocyanate free from urethane groups and having an isocyanate functionality greater than 1.0 and preferably greater than 2.0 or

(ii) a urethane polyisocyanate derived from a polyisocyanate by reaction thereof with the hydroxyl groups of a polyhydroxy compound, the said urethane polyisocyanate having an isocyanate functionality greater than 1.0 and preferably greater than 2.0;

The aforesaid hydroxyalkyl acrylate or methacrylate preferably contains from 2 to 4 carbon atoms in the hydroxyalkyl group; 2-hydroxyethyl and 2-hydroxypropyl acrylates and methacrylates are especially preferred.

When the first isocyanate composition comprises a urethane polyisocyanate the latter is preferably a urethane polyisocyanate which is in turn derived by reaction of a first polyhydroxy compound with a polyisocyanate which itself has an isocyanate functionality greater than 2.0.

The polyisocyanates especially preferred both for direct reaction with the hydroxyalkyl acrylate or methacrylate and for preparation of an intermediate urethane polyisocyanate, are polymethylene polyphenyl polyisocyanates. However, we do not exclude the possibility that where a urethane polyisocyanate is used it may be derived from an alternative aromatic isocyanate, e.g. a toluene diisocyanate, or even an aliphatic or alicyclic isocyanate, e.g. hexamethylene diisocyanate or 4,4'-(di-isocyanato)-dicyclohexylmethane.

The isocyanate functionality (i.e. average number of isocyanate groups per molecule) of the polyisocyanate (or the urethane polyisocyanate) employed is particularly preferably at least 2.2, and more particularly preferably is in the range from 2.5 to 3.0. The polyisocyanate may be an individual polyisocyanate or may be a mixture of polyisocyanates having an average functionality as specified herein.

When the urethane polyisocyanate is derived from a diisocyanate (for example diphenylmethane-4,4'-diisocyanate or other aromatic diisocyanate) reaction with a first polyhydroxy compound which contains more than two hydroxyl groups will be necessary in order to yield a urethane polyisocyanate having the desired isocyanate functionality of greater than 2.0.

Suitable first polyhydroxy compounds include those conventionally used in the art for producing urethanes by reaction of a polyhydroxy compound with an isocyanate. Preferably the first polyhydroxy compound is a diol or triol, although we do not exclude the possibility that it may contain more hydroxy groups, for example up to six.

Suitable diols include glycols of the formula HO-Q-OH, where Q is an alkylene or polyalkylene ether radical; dihydric phenols and bis-phenols for example 2,2-bis(4-hydroxyphenyl) propane - (Bisphenol A) and bis(4-hydroxyphenyl) sulphone - (Bisphenol S), and ethoxylated or propoxylated derivatives thereof.

Suitable triols include glycerol, trimethylol propane (1,1,1-tris (hydroxymethyl)-propane) and ethoxylated or propoxylated derivatives thereof.

Where the first isocyanate composition comprises a urethane polyisocyanate it may also contain a proportion of one or more polyurethanes of higher molecular weight derived by reaction of the above product with further molecules of polyhydroxy compound and polyisocyanate.

In the preparation of a urethane polyisocyanate, the proportions of polyisocyanate and first polyhydroxy compound are chosen so that all the hydroxyl groups of the polyhydroxy compound are converted into urethane groups. Consequently the isocyanate functionality of the urethane polyisocyanate will be greater than the isocyanate functionality of the polyisocyanate used as starting material. Thus for example, if the polyisocyanate starting material has a functionality $(n)$ of 2.5 the isocyanate functionality of the urethane polyisocyanate derived from a diol will be $2n-2 = 3.0$.

Whichever particular first polyhydroxy compound is used, the relative proportions of polyhydroxy compound and polyisocyanate and/or the isocyanate functionality of the polyisocyanate is chosen so as to yield the required isocyanate functionality in the urethane polyisocyanate.

The unsaturated urethane used in the process according to the present invention may be prepared by reaction of the hydroxyalkyl acrylate or methacrylate with the first isocyanate composition of functionality greater than 2.0 using methods conventional in the art for the preparation of polyurethanes.

Mixtures of two or more hydroxyalkyl acrylates and/or methacrylates may be used if desired.

The relative proportions of the reactants employed in the preparation of the unsaturated urethane are preferably such as to provide at least 1 mole of the hydroxyalkyl acrylate or methacrylate per isocyanate group. Excess (unreacted) hydroxyalkyl acrylate or methacrylate is in general not objectionable in the reaction product since any such excess monomer may in many cases simply be incorporated in the copolymer produced in the subsequent copolymerisation process. The extent of any excess of hydroxyalkyl acrylate or methacrylate will therefore be determined in practice by economic considerations and the desirability or otherwise of incorporating the particular hydroxyalkyl acrylate or methacrylate in the final copolymer.

Catalysts used in the reaction between the hydroxyalkyl acrylate or methacrylate and the first isocyanate composition may be those known in the art of polyurethane production, for example tertiary amines and metal salts, especially di-n-butyltin dilaurate.

The reaction between the hydroxyalkyl acrylate or methacrylate and the first isocyanate composition is preferably carried out in the presence of an inert liquid diluent. A wide range of diluents may be used but most conveniently, in order to avoid the need for separation of the unsaturated urethane, the reaction is carried out in the presence of Component B as diluent.

Component B is suitably an acrylate or methacrylate monomer or styrene or a mixture of such monomers. Preferably, Component B is methyl methacrylate which is conveniently of a commercial grade, typically containing a trace amount of a suitable stabiliser, e.g. about 60 ppm of hydroquinone.

Component C, the isocyanate-ended soft segment, used in the process according to the present invention may be prepared by reacting a second isocyanate composition which is a polyisocyanate preferably having an isocyanate functionality of about 2, with a suitable second polyhydroxy compound which is preferably a diol. Suitable examples of polyisocyanates have been described hereinbefore.

Suitable second polyhydroxy compounds are well known in the polyurethane art. They are typically polymeric materials, typically having a molecular weight of above 1000, and having a glass transition temperature below 0°C. Preferably it is derived from a polyalkylene ether, e.g. polypropylene ether, polyethylene ether, polytetramethylene ether, or a polyester, e.g. polyethylene adipate or polycaprolactone.

Whilst it is often convenient to use a preformed isocyanate-ended soft segment, it can be prepared *in situ* by adding the second polyisocyanate composition and the second polyhydroxy compound separately, but preferably in admixture with one or more of the aforesaid Components during formation of the composition and reacting at least a substantial proportion of them together before polymerisation of Components A and B has exceeded about 5% conversion.

Component D, the compound containing a plurality of isocyanate-reactive groups, has a molecular weight of less than 250.- It is preferably a polyol or a polyamine and more preferably is a diol or triol or diamine. The diol may be a dialcohol or a dihydric phenol, e.g. ethylene glycol, propylene glycol, 1,4-butanediol, bis-phenol A. As examples of triols may be mentioned glycerol or trimethylol propane. The diamine is preferably a hindered diamine, e.g. 1-methyl-3,5-diethyl-2,4-diaminobenzene.

The composition used in the process of the present invention preferably contains both a first catalyst for initiating copolymerisation of Component A and Component B and a second catalyst for catalysing the reaction of Component C with Component D.

The aforementioned first catalyst is preferably a peroxide.

By "peroxide" for use in the present invention we mean an organic peroxide having the formula

R-O-O-R

in which the groups R, which may be the same or different, are hydrogen, alkyl, aryl or acyl groups, no more than one of the groups R being hydrogen. The term acyl means groups having the formula

R'-CO-

in which R' is an alkyl, aryl, alkoxy or aryloxy group or substituted derivatives thereof. A preferred peroxide is dibenzoyl peroxide or a derivative thereof, e.g. 4,4'-dichloro-dibenzoyl peroxide.

The peroxide is used in conjunction with an accelerator which is preferably a tertiary amine, e.g. N,N-dimethylaniline or preferably N,N-dimethyl-p-toluidine, although we do not exclude the possibility that the accelerator may be a transition metal, e.g. copper, manganese or cobalt.

Examples of suitable second catalysts have been described hereinbefore.

Polymerisable compositions used in the process according to the present invention have the advantage of having viscosities which are sufficiently low such that large amounts of inorganic filler may be incorporated therein.

Where an inorganic filler is present in polymerisable compositions used in the process according to the present invention it may be present in particulate, plate-like or fibrillar form. Suitable fillers include silica, calcium carbonate, talc, alumina trihydrate, mica, various clays and vermiculite. Glass fibre which has a fibre length of up to 1.5 mm may be used as filler.

Where an inorganic filler is present in polymerisable compositions used in the process according to the present invention the weight ratio of total polymerisable material to inorganic filler is typically in the range from 3:1 to 1:3 and often is about 1:1.

When an inorganic filler is used a suitable "coupling agent" may in some cases advantageously be incorporated to link the filler to the polymer matrix. Thus, for example, when the filler is silica a suitable silane coupling agent may be incorporated, for example γ-methacrylyl-oxypropyl-trimethoxysilane.

Organic polymers, especially thermoplastic polymers, may also be incorporated in polymerisable compositions used in the process according to the present invention. One or more organic polymers may either be dissolved in the polymerisable composition or one of the Components thereof or added in particulate form, with or without the incorporation of inorganic fillers as already described. Polymers which may be incorporated include polymers and copolymers of alkyl acrylates and/or methacrylates containing from 1 to 8 carbon atoms in the alkyl group, for example methyl methacrylate); polymers and copolymers of styrene and α-methylstyrene (for example copolymers of styrene with butadiene); polymers and copolymers of acrylonitrile (for example copolymers with vinyl chloride or with vinyl acetate) and polymers and copolymers of vinyl acetate. Incorporation of such polymers is often useful in reducing in-mould shrinkage.

In general, the proportion of organic polymer incorporated may be, for example, from 1 to 25 parts by weight (especially from 3 to 10 parts) per 100 parts of unsaturated urethane/methyl methacrylate mixture, the upper limit depending upon the desired viscosity of the mixture and the desired mechanical properties of the final product.

Other additives such as plasticisers and colourants known in the art may also be incorporated into polymerisable compositions according to the present invention.

The process according to the present invention is readily adaptable to reaction injection moulding. In a preferred mode of operating such a process, Components A, B, the second polyhydroxy compound, the second polyisocyanate composition and Component D are injected into a mould simultaneously, the mould temperature and catalysts being chosen to ensure that formation of Component C is substantially complete before polymerisation of Components A and B has exceeded about 5% conversion. In an alternative mode of operating the process, Components A and B are mixed and the mixture is divided into three parts. To the first part is added the second polyhydroxy compound and the urethane catalyst. To the second part is added a second isocyanate composition and a peroxide. To the third part is added Component D and the accelerator for peroxide decomposition. The first and second parts are mixed such that at least a portion of Component C is formed and then the third part is added thereto.

The invention is illustrated by the following Examples.

Preparation of Unsaturated Urethane/Methyl Methacrylate

'Suprasec' DND (200g) was dissolved in methyl methacrylate (581g) containing 60 ppm of hydroquinone as polymerisation inhibitor, and di-n-butyltin dilaurate (4.0g) was added. The solution was stirred at ambient temperature and 2-hydroxyethyl methacrylate (200g), containing 300 ppm of paramethoxyphenol as polymerisation inhibitor, was added rapidly (over a period of one minute). The heat of reaction raised the temperature of the mixture to 80°C after a period of 3 minutes from completion of addition of the 2-hydroxyethyl methacrylate. The temperature was maintained for a further period of one hour and the solution allowed to cool. Additional stabilisers can be added at this stage. The product (hereinafter referred to for convenience as "Mixture Z") was a clear brown solution of viscosity 70 centipoise at 20°C at 60 rpm Brookfield. The reaction was deemed complete when the free isocyanate was less than 0.1% by weight.

Examples 1 and 2

These Examples illustrate the preparation of products by the process of the present invention.

In Example 1, the polymerisable composition contained 80% w/w of Components A and B and 20% w/w Components C·and D; in Example 2, the polymerisable composition contained 70% w/w of Components A and B and 30% w/w Components C and D.

General Procedure

Three portions of Mixture Z were used. Polytetramethylene ether diol (MW 1000) and di-N-butyl tin dilaurate were added to the first portion. "Suprasec" VM10 and dibenzoyl peroxide were added to the second portion. Butanediol and N,N-dimethyl-p-toluidine were added to the third portion.

The first and second portions were mixed and reaction was allowed to proceed with generation of the isocyanate-ended soft segment; when a first peak exotherm occurred, the third portion was added and the resulting reaction mixture was poured into a mould, at 20°C, formed from two glass plates separated by a 3mm gasket. The products were demoulded after a second peak exotherm, at approximately 10 to 15 minutes, and were post-cured at 110°C for 1 hour. Their mechanical properties were then determined.

The compositions of the polymerisable compositions are shown in Table 1 and the mechanical properties of the products are shown in Table 2.

In Comparative Test 1, Components C and D were not used. In Comparative Tests 2 and 3, Components C and D together provided 20% w/w and 40% w/w of the polymerisable compositions respectively; Components A, B, C and D, dibutyl tin dilaurate, dibenzoyl peroxide and N,N-dimethyl-p-toluidine were mixed such that the polymerisation of Component A with Component B occurred simultaneously with the reaction of Suprasec VM10 with both diols.

"Suprasec" DND is a polymethylene polyphenyl polyisocyanate composition having an average isocyanate functionality of about 2.6.

"Suprasec" VM10 is a diphenylmethane diisocyanate composition having an average isocyanate functionality of about 2.07.

## TABLE 1

| Reagents | Example No 1 | | | Example No 2 | | |
|---|---|---|---|---|---|---|
| | First Portion (grams) | Second Portion (grams) | Third Portion (grams) | First Portion (grams) | Second Portion (grams) | Third Portion (grams) |
| Mixture Z | 77.59 | 53.30 | 27.15 | 67.89 | 46.64 | 23.76 |
| Suprasec VM10 | | 16.29 | | | 24.44 | |
| Polytetra-methylene ether diol | 21.33 | | | 32.00 | | |
| Butane-diol | | | 1.90 | | | 2.85 |
| DBTDL | 0.39 | | | 0.59 | | |
| BPO | | 1.55 | | | 1.36 | |
| DMPT | | | 0.51 | | | 0.45 |

DBTDL: Dibutyl tin dilaurate

BPO:   Dibenzoyl peroxide

DMPT:   N,N-dimethyl-p-toluidine

TABLE 2

| Example No | Tensile Extension to Break (%) | Flexural Modulus (GPa) | Charpy Notched Impact Strength (kJ/m$^2$) | Heat Sag at 120°C (mm) |
|---|---|---|---|---|
| 1 | 6.5 | 2.0 | 5.5 | 10 |
| 2 | 13.5 | 1.5 | 12 | 15 |
| CT1 | 2.5 | 3.5 | 2.9 | 6 |
| CT2 | 3.5 | 1.9 | 9.5 | 21 |
| CT3 | 7.5 | 0.9 | a | 32 |

a: Not determined.

CT1, CT2, CT3: Comparative tests.

Charpy noted impact strength is measured using a notched tip of radius 0.25 mm.

Heat sag is measured using a specimen 25 mm in width and 3 mm in thickness with a 100 mm overhang.

Example 3

An unsaturated urethane mixture (Mixture 'Y') was prepared by the procedure described previously except that 191 gm of 2-hydroxyethyl methacrylate was used.

Three portions of Mixture 'Y' were used, polytetramethylene ether diol (M. Wt 1000) and di-n-butyl tin dilaurate (DBTDL) were added to the first portion. 'Suprasec' DND and dibenzoyl peroxide - (BPO) were added to the second portion. Butanediol and N,N-diemthylaniline (DMA) were added to the third portion. All quantities were as shown in Table 3. 'Suprasec' DND had an average isocyanate functionality of 2.6.

The first and second portions were mixed and when the exotherm peak was reached, the third portion was mixed in and the resulting mixture poured into a mould consisting of two pairs plates separated by a 3 mm gasket at 20°C. The products were demoulded after a second peak exotherm (of the order of 90 to 100°C) at approximately 15 minutes and were post-cured at 110°C for 1 hour. The mechanical and thermomechanical properties were measured and are shown in Table 4.

Example 4

Example 3 was repeated except that in the second portions, 70 gm of methylmethacrylate were used in place of 70 gm Mixture 'Y' and dioctanoyl peroxide (OPO) was used in place of dibenzoyl peroxide and in the third portion N,N-dimethyl-p-toluidine was used in place of DMA. The quantities used are given in Table 3. The procedure was the same except that after charging the mixture to the mould, the methacrylate polymerisation was initiated by placing the mould in a water bath at 80°C. The product was demoulded after approximately 15 minutes and post-cured at 110°C for one hour. The mechanical properties are shown in Table 4. A comparative example (CT 4) in which the components C and D and the DBTDL were not used is also shown in Table 4.

TABLE 3

| Reagents | Example 3 | | | Example 4 | | |
|---|---|---|---|---|---|---|
| | First Portion (grams) | Second Portion (grams) | Third Portion (grams) | First Portion (grams) | Second Portion (grams) | Third Portion (grams) |
| Mixture 'Y' | 101.8 | 70.0 | 35.6 | 101.8 | - | 35.6 |
| Methyl methacrylate | - | - | - | - | 70 | - |
| 'Suprasec' DND | - | 28.8 | - | - | 28.8 | - |
| Polytetramethylene ether diol | 48 | - | - | 4.28 | - | - |
| Butane diol | - | - | 4.28 | - | - | 4.28 |
| DBTDL | 0.89 | - | - | 0.89 | - | - |
| BPO | - | 2.04 | - | - | - | - |
| DMA | - | - | 0.68 | - | - | - |
| OPO | - | - | - | - | 2.04 | - |
| DMPT | - | - | - | - | - | 0.68 |

TABLE 4

| Example No | Tensile Extension to Break (%) | Tensile Modulus (GPa) | Tensile Strength (MPa) | Flex Modulus (GPa) | Charpy Notched (0.25 mm rad) $KJ/m^2$ | Heat Sag 120°C/1 hr (mm) |
|---|---|---|---|---|---|---|
| 3 | 7.2 | 1.58 | 44 | 2.03 | 6.1 | 9.5 |
| 4 | 15.5 | 1.34 | 37 | 1.8 | 6.6 | 9.5 |
| CT4 | 3.5 | 2.4 | 65 | 3.2 | 3.6 | 10.5 |

## Claims

1. A process for the preparation of cross-linked products which comprises the step of polymerising a polymerisable composition which comprises:

Component A which is an unsaturated urethane;

Component B which is a vinyl monomer which is liquid at room temperture and which is a solvent for the unsaturated urethane;

Component C which is an isocyanate-ended soft segement, and

Component D which is a compound containing a plurality of isocyanate-reactive groups and having a molecular weight of less than 250,

wherein the weight ratio of Component A:

Component B is between 20:80 and 80:20 and the weight ratio of (Component A + Component B):- (Component C + Component D) is between 85:15 and 15:85.

2. A process according to Claim 1 wherein the weight ratio of (Component A + Component B):- (Component C + Component D) is between 85:15 and 50:50.

3. A process according to Claim 1 wherein Component A is the product of reaction of a hydroxyalkyl acrylate or methacrylate and

(i) a polyisocyanate free from urethane groups and having an isocyanate functionality greater than 1.0 and preferably greater than 2.0 or

(ii) a urethane polyisocyanate derived from a polyisocyanate by reaction thereof with the hydroxyl groups of a polyhydroxy compound, the said urethane polyisocyanate having an isocyanate functionality greater than 1.0 and preferably greater than 2.0;

4. A process according to Claim 3 wherein the polyisocyanate free from urethane groups or the polyisocyanate from which the urethane polyisocyanate is derived is a polymethylene polyphenyl polyisocyanate.

5. A process according to Claim 1 wherein Component B is methyl methacrylate.

6. A process according to Claim 1 wherein Component C is the reaction product of a polyisocyanate having an isocyanate functionality of about 2 and a polymeric diol having a molecular weight above 1000 and a glass transition temperature below 0°C.

7. A process according to Claim 1 wherein Component C is formed _in situ_ in admixture with Component A and/or Component B.

8. A process according to Claim 1 wherein Component D is a polyol or polyamine.

9. A process according to Claim 7 wherein Components A, B and D, a polyisocyanate having an isocyanate functionality of about 2 and a polymeric diol having a molecular weight above 1000 and a glass transition temperature below 0°C are simultaneously injected into a mould by the reaction injection moulding technique, the mould temperature and catalysts being chosen to ensure that formation of Component C is substantially complete before polymerisation of Components A and B has exceeded 5% conversion.